# EUROPEAN PATENT APPLICATION

(11) **EP 4 572 357 A1**
(43) Date of publication of application: **18.06.2025**
(21) Application number: 22954675.9
(22) Date of filing: 12.08.2022
(51) Int. Cl.: H04W 12/0433

(54) **SECURITY MECHANISM VERIFICATION METHOD AND APPARATUS FOR RELAY COMMUNICATION, DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/112327
(87) International publication number: WO 2024/031725

(57) **Abstract**

The present disclosure provides a security mechanism verification method and apparatus for relay communication, a device, and a storage medium. The method comprises: receiving a first request message sent by a terminal device, the first request message carrying first information, and the first information being used for indicating a first security mechanism corresponding to a relay service of the terminal device; determining a second security mechanism corresponding to a relay service of a relay device; determining whether the first security mechanism matches the second security mechanism; and sending a second message according to a matching condition. In this way, the present disclosure can implement verification of a security mechanism of relay communication.

## Description

### TECHNICAL FIELD

The present disclosure relates to the technical field of wireless communication, and in particular, to a method and an apparatus for verifying a security mode of a relay communication, a device and a storage medium.

### BACKGROUND

At present, for the security in the proximity based services (ProSe) relay communication, the user plane based security mode or the control plane based security mode may be used to establish the discovery and communication security for PC5 interface (i.e., the direct communication interface) between a terminal device and a relay device. This relay device is also called U2N (i.e., user-to-network) relay device. For ProSe U2N relay service, the terminal device may choose to implement either the user plane based security mode or the control plane based security mode.

However, when the terminal device and the relay device are configured to adopt the control plane based security mode, the terminal device may still continue to adopt the user plane based security mode to send the direct communication request, or the relay device may still adopt the user plane based security mode after receiving the direct communication request. For these situations, no corresponding solutions have been proposed in the related art.

Therefore, how to prevent the terminal device and relay device related to relay communication from adopting inappropriate security mode is an urgent problem to be solved.

### SUMMARY

The present disclosure provides a method and an apparatus for verifying a security mode of a relay communication, a device, and a storage medium, so as to realize the verification of the security mode of the relay communication.

In a first aspect, the present disclosure provides a method for verifying a security mode of a relay communication. This method may be applied to a relay device. The method includes: receiving a first request message sent by a terminal device, where the first request message carries first information, and the first information is configured to indicate a first security mode corresponding to a relay service of the terminal device; determining a second security mode corresponding to the relay service of the relay device; determining whether the first security mode matches the second security mode; and sending a second message according to the matching condition.

In some possible implementations, the first information may include a relay service code (RSC) of the relay service and a key parameter corresponding to the first security mode.

In some possible implementations, the first security mode may be a control plane based security mode or a user plane based security mode, and the second security mode may be the user plane based security mode.

In some possible implementations, the operation of determining the second security mode corresponding to the relay service of the relay device may include: receiving second information sent by a core network function associated with the relay device, where the second information is configured to indicate the relay service and a corresponding security mode; determining the second security mode according to the second information.

In some possible implementations, the operation of sending the second message according to the matching condition may include: sending the second message to the terminal device when it is determined that the first security mode does not match the second security mode, where the second message is configured to indicate to reject the first request message.

In some possible implementations, the operation of sending the second message according to the matching condition may include: sending the second message to a network function associated with the relay device when it is determined that the first security mode matches the second security mode, where the second message carries third information, and the third information is configured to indicate the second security mode corresponding to the relay service of the relay device.

In some possible implementations, the third information may include a relay service code (RSC) of the relay service and a key parameter corresponding to the second security mode.

In some possible implementations, after sending the second message to the first network function, the above method may further include: receiving a third message sent by the network function associated with the relay device, where the third message is configured to indicate that a third security mode corresponding to the relay service of a core network function associated with the relay device does not match the second security mode; and sending the second message to the terminal device according to the third message, where the second message is configured to indicate to reject the first request message.

In a second aspect, the present disclosure provides a method for verifying a security mode of a relay communication. This method may be applied to a network function. The above method includes: receiving a third request message, where the third request message carries fourth information, and the fourth information is configured to indicate a first security mode corresponding to a relay service of a terminal device or a second security mode corresponding to the relay service of a relay device; sending a fourth request message to a core network function according to the fourth information, where the fourth request message is configured to request a third security mode corresponding to the relay service of the core network function; receiving a fifth message sent by the core network function, where the fifth message is configured to indicate the third security mode; and determining whether the first security mode or the second security mode matches the third security mode.

In some possible implementations, the fourth information may include an RSC of the relay service and a key parameter corresponding to the first security mode, or the fourth information may include the RSC of the relay service and a key parameter corresponding to the second security mode.

In some possible implementations, the fourth request message may carry the RSC of the relay service.

In some possible implementations, the first security mode may be a control plane based security mode or a user plane based security mode, and the third security mode may be the user plane based security mode.

In some possible implementations, the above method may further include: sending a sixth message configured to indicate that the first security mode or the second security mode does not match the third security mode.

In some possible implementations, the network function may be a proximity based services key management function (PKMF) associated with the relay device, and the core network function may be a policy control function (PCF) associated with the relay device.

In some possible implementations, the network function may be a PKMF associated with the terminal device, and the core network function may be a PCF associated with the terminal device.

In a third aspect, the present disclosure provides a method for verifying a security mode of a relay communication. This method may be applied to a core network function. The above method includes: receiving a fourth request message sent by a network function, where the fourth request message is configured to request a third security mode corresponding to a relay service of the core network function; sending a fifth message to the network function in response to the fourth request message, where the fifth message is configured to indicate the third security mode.

In some possible implementations, the fourth request message may carry an RSC of the relay service.

In some possible implementations, the first security mode may be a control plane based security mode or a user plane based security mode, and the third security mode may be the user plane based security mode.

In some possible implementations, the network function may be a PKMF associated with the relay device, and the core network function may be a PCF associated with the relay device.

In some possible implementations, the network function may be a PKMF associated with the terminal device, and the core network function may be a PCF associated with the terminal device.

In a fourth aspect, the present disclosure provides an apparatus for verifying a security mode of a relay communication. The apparatus may be provided in a relay device. The apparatus includes: a receiving module, configured to receive a first request message sent by a terminal device, where the first request message carries first information, and the first information is configured to indicate a first security mode corresponding to a relay service of the terminal device; a processing module, configured to determine a second security mode corresponding to the relay service of the relay device and determine whether the first security mode matches the second security mode; and a sending module, configured to send a second message according to a matching condition.

In some possible implementations, the first information may include an RSC of the relay service and a key parameter corresponding to the first security mode.

In some possible implementations, the first security mode may be a control plane based security mode or a user plane based security mode, and the second security mode may be the user plane based security mode.

In some possible implementations, the receiving module may be configured to receive second information sent by a core network function associated with the relay device, where the second information is configured to indicate the relay service and a corresponding security mode; and the processing module may be configured to determine the second security mode according to the second information.

In some possible implementations, the sending module may be configured to send the second message to the terminal device when it is determined that the first security mode does not match the second security mode, where the second message is configured to indicate to reject the first request message.

In some possible implementations, the sending module may be configured to send the second message to a network function associated with the relay device when it is determined that the first security mode matches the second security mode, where the second message carries third information, and the third information is configured to indicate the second security mode corresponding to the relay service of the relay device.

In some possible implementations, the third information may include an RSC of the relay service and a key parameter corresponding to the second security mode.

In some possible implementations, the receiving module may also be configured to: receive a third message sent by the network function associated with the relay device, where the third message is configured to indicate that a third security mode corresponding to the relay service of a core network function associated with the relay device does not match the second security mode; and the sending module may also be configured to send the second message to the terminal device according to the third message, where the second message is configured to indicate to reject the first request message.

In a fifth aspect, the present disclosure provides an apparatus for verifying a security mode of a relay communication. The apparatus may be provided in a network function. The above apparatus includes: a receiving module, configured to receive a third request message, where the third request message carries fourth information, and the fourth information is configured to indicate a first security mode corresponding to a relay service of a terminal device or a second security mode corresponding to the relay service of a relay device; a sending module, configured to send a fourth request message to a core network function according to the fourth information, where the fourth request message is configured to request a third security mode corresponding to the relay service of the core network function. The receiving module is further configured to: receive a fifth message sent by the core network function, and the fifth message is configured to indicate the third security mode. The apparatus further includes a processing module configured to determine whether the first security mode or the second security mode matches the third security mode.

In some possible implementations, the fourth information may include an RSC of the relay service and a key parameter corresponding to the first security mode, or the fourth information may include an RSC of the relay service and a key parameter corresponding to the second security mode.

In some possible implementations, the fourth request message may carry the RSC of the relay service.

In some possible implementations, the first security mode may be a control plane based security mode or a user plane based security mode, and the third security mode may be the user plane based security mode.

In some possible implementations, the sending module may be further configured to send a sixth message configured to indicate that the first security mode or the second security mode does not match the third security mode in a case where it is determined that the first security mode or the second security mode does not match the third security mode.

In some possible implementations, the network function may be a PKMF associated with the relay device, and the core network function may be a PCF associated with the relay device.

In some possible implementations, the network function may be a PKMF associated with the terminal device, and the core network function may be a PCF associated with the terminal device.

In a sixth aspect, the present disclosure provides an apparatus for verifying a security mode of a relay communication. The apparatus may be provided in a core network function. The above apparatus includes: a receiving module, configured to receive a fourth request message sent by a network function, where the fourth request message is configured to request a third security mode corresponding to a relay service of the core network function; and a sending module, configured to send a fifth message to the network function in response to the fourth request message, where the fifth message is configured to indicate the third security mode.

In some possible implementations, the fourth request message may carry an RSC of the relay service.

In some possible implementations, the first security mode may be a control plane based security mode or a user plane based security mode, and the third security mode may be the user plane based security mode.

In some possible implementations, the network function may be a PKMF associated with the relay device, and the core network function may be a PCF associated with the relay device.

In some possible implementations, the network function may be a PKMF associated with the terminal device, and the core network function may be a PCF associated with the terminal device.

In a seventh aspect, the present disclosure provides a communication system including a network function and a core network function. The network function is configured to: send a fourth request message to a core network function according to fourth information, where the fourth information is configured to indicate a first security mode corresponding to a relay service of a terminal device or a second security mode corresponding to the relay service of a relay device, and the fourth request message is configured to request a third security mode corresponding to the relay service of the core network function; and determine whether the first security mode or the second security mode matches the third security mode. The core network function is configured to: send a fifth message to the network function according to the fourth request message, where the fifth message is configured to indicate the third security mode.

In some possible implementations, the network function may also be configured to: receive a third request message, where the third request message carries fourth information.

In some possible implementations, the fourth information may include an RSC of the relay service and a key parameter corresponding to the first security mode, or the fourth information may include an RSC of the relay service and a key parameter corresponding to the second security mode.

In some possible implementations, the fourth request message may carry the RSC of the relay service.

In some possible implementations, the first security mode may be a control plane based security mode or a user plane based security mode, and the third security mode may be the user plane based security mode.

In some possible implementations, the network function may also be configured to send a sixth message configured to indicate that the first security mode or the second security mode does not match the third security mode in a case where it is determined that the first security mode or the second security mode does not match the third security mode.

In some possible implementations, the network function may be a PKMF associated with the relay device, and the core network function may be a PCF associated with the relay device.

In some possible implementations, the network function may be a PKMF associated with the terminal device, and the core network function may be a PCF associated with the terminal device.

In an eighth aspect, the present disclosure provides an electronic device, including: a memory; a processor, connected to the memory, configured to execute computer-executable instructions stored on the memory, to implement the method for verifying the security mode of the relay communication as described in any one of the first to third aspects and possible implementations thereof.

In a ninth aspect, the present disclosure provides a computer storage medium storing a computer-executable instruction, which, after being executed by a processor, can realize the method for verifying the security mode of the relay communication as described in any one of the first to third aspects and possible implementations thereof.

In the present disclosure, on the one hand, the security mode corresponding to the relay service of the terminal device is verified, and on the other hand, the security mode corresponding to the relay service of the relay device is verified, thereby realizing the verification of the security mode of relay communication and ensuring that the terminal device and the relay device that carry out the relay communication adopt a correctly configured security mode.

It should be understood that the technical solutions of the fourth to ninth aspects of the present disclosure are consistent with those of the first to third aspects of the present disclosure. The beneficial effects obtained by each aspect and the corresponding feasible implementation manners are similar, which are not repeated here.

### BRIEF DESCRIPTION OF THE DRAWINGS

FIG 1 is a schematic structural diagram of a communication system in an embodiment of the present disclosure;
FIG 2 is a flowchart of a method for verifying a security mode of a relay communication in an embodiment of the present disclosure;
FIG 3 is a flowchart of another method for verifying a security mode of a relay communication in an embodiment of the present disclosure;
FIG 4 is a flowchart of yet another method for verifying a security mode of a relay communication in an embodiment of the present disclosure;
FIG 5 is a schematic diagram of the implementation process of the verification procedure of the security mode of the relay service in an embodiment of the present disclosure;
FIG 6 is a schematic structural diagram of an apparatus for verifying a security mode of a relay communication in an embodiment of the present disclosure;
FIG 7 is a schematic structural diagram of another apparatus for verifying a security mode of a relay communication in an embodiment of the present disclosure;
FIG 8 is a schematic structural diagram of an electronic device in an embodiment of the present disclosure; and
FIG 9 is a schematic structural diagram of a terminal device in an embodiment of the present disclosure.

### DETAILED DESCRIPTION

Exemplary embodiments will be described in detail herein, examples of which are represented in the accompanying drawings. When the following description relates to the accompanying drawings, the same numerals in different drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the present disclosure, such information should not be limited to these terms. These terms are only used to distinguish the same type of information from each other. For example, without departing from the scope of the embodiments of the present disclosure, "the first information" may also be referred to as "the second information", and similarly, "the second information" may also be referred to as "the first information". Depending on the context, the word "if" as used herein may be interpreted as "when... " or "in the case..." or "in response to determination".

Further, in the description of the embodiments of the present disclosure, "and/or" is only an association relationship for describing associated objects, indicating that three relationships can exist. For example, A and/or B can mean: A exists alone, A and B exist simultaneously, and B exists alone. In addition, in the description of the embodiments of the present disclosure, "plurality" may refer to two or more than two.

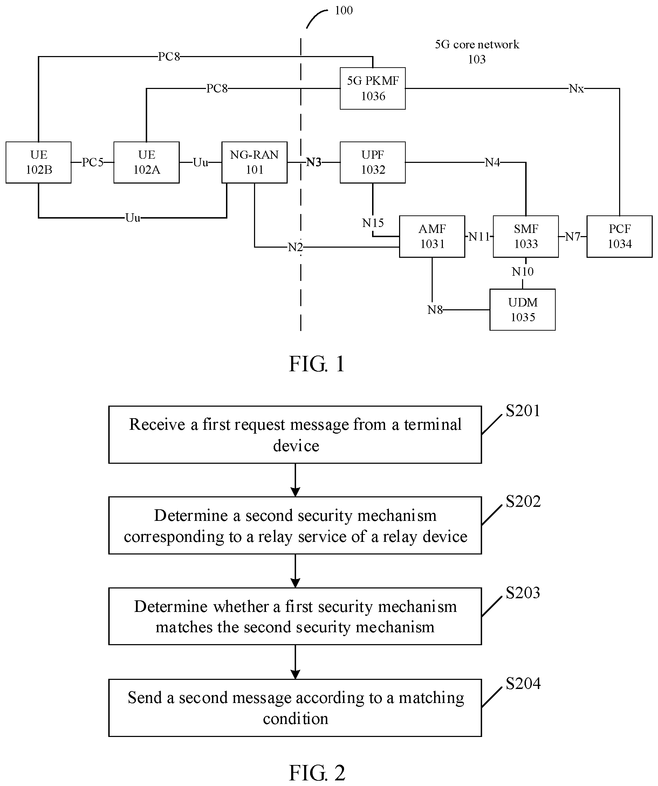

FIG 1 is a schematic structural diagram of a communication system in an embodiment of the present disclosure. As shown in FIG 1, the above communication system 100 may include a 5G access network (AN) and a 5G core network (5GC). The 5G access network may include a next generation radio access network (NG-RAN) 101. The NG-RAN 101 communicates with a UE (user equipment) through a Uu interface. The UE may include a relay device 102A and a terminal device 102B. The 5G core network 103 may include: an access and mobility management function (AMF) 1031, a user plane function (UPF) 1032, a session management function (SMF) 1033, a policy control function (PCF) 1034, a 5G ProSe key management function (5G PKMF) 1036, etc.

In the embodiment of the present disclosure, the above communication system may also include other network elements, which is not specifically limited in the embodiment of the present disclosure.

In the above communication system, the terminal device can access the 5G core network through the 3rd generation partnership project (3GPP) technology. Specifically, the terminal device can access the 5G core network through the 3GPP access network device.

In the above communication system, PCF 1034 has a policy control function and is mainly responsible for billing policies for sessions and business flows, and policy decisions related to quality of service (QOS) bandwidth guarantees, and policies.

SMF 1033 has a session management function, which mainly performs functions such as session management, execution of control policies issued by PCF, selection of user plane function (UPF), and allocation of internet protocol (IP) addresses of UE.

AMF 1031 has access and mobility management functions and mainly performs mobility management, access authentication/authorization and other functions. In addition, it is also responsible for transmitting user policies between UE and PCF.

UPF 1032 is a user plane functional entity, as an interface with the data network, it completes functions such as user plane (UP) data forwarding, session/flow level-based billing statistics, bandwidth limitation, etc.

5G PKMF 1036 is a user plane functional entity, which is used to realize functions such as a ProSe security management. In the embodiment of the present disclosure, 5G PKMF may also be referred to as PKMF.

The functions of each interface are described as follows:
N7 is the interface between PCF 1034 and SMF 1033, used to issue control policies for packet data unit (PDU) session granularity and service data flow granularity.
N3 is a communication interface between UPF 1032 and NG-RAN 101.
N15 is the interface between PCF 1034 and AMF 1031, used to issue UE policies and access control related policies.
N4 is the interface between SMF 1033 and UPF 1032, used to transfer information between the control plane and UP, including the distribution of forwarding rules from the control plane to UP, QoS control rules, traffic statistics rules, etc., and information reporting of UP.
N11 is the interface between SMF 1033 and AMF 1031, used to transfer PDU session tunnel information between NG-RAN 101 and UPF 1034, transfer control messages sent to UE, and transfer radio resource control information sent to NG-RAN 101, etc.
N2 is the interface between AMF 1031 and NG-RAN 101, used to transfer wireless bearer control information from the core network side to NG-RAN 101, etc.
N8 is the interface between AMF 1031 and UDM 1035, used for AMF 1031 to obtain access and mobility management-related subscription data and authentication data from UDM 1035, and for AMF 1031 to register UE current mobility management-related information to UDM 1035, etc.
N10 is the interface between SMF 1033 and UDM 1035, used for SMF 1033 to obtain session management-related subscription data from UDM 1035, and for SMF 1033 to register UE current session-related information to UDM 1035, etc.
Nx is the interface between 5G PKMF 1036 and PCF 1034.

The above user equipment may be a device with a wireless communication function. UE may be deployed on land, including indoors or outdoors, handheld, wearable or vehicle-mounted; they can also be deployed on water (such as ships, etc.); and they can also be deployed in the air (such as aircraft, balloons, satellites, etc.). The above UE may be a mobile phone, a tablet computer (Pad), a computer with wireless transceiver functions, a virtual reality (VR) terminal device, an augmented reality (AR) terminal device, or a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The UE may also be a handheld device, a vehicle-mounted device, a wearable device, a computing device having wireless communication functions, or other processing device connected to a wireless modem, etc. Optionally, the UE may also be called by different names in different networks, for example, terminal device, access terminal, subscriber unit, subscriber station, mobile station, mobile table, remote station, remote terminal, mobile device, user terminal, terminal, wireless communication device, user agent or user apparatus, cellular telephone, cordless telephone, session initiation protocol (SIP) telephone, wireless local loop (WLL) station, personal digital assistant (PDA), terminal device in 5G network or future evolution network, etc.

The above access network device may be a device on the access network side for supporting the terminal to access the wireless communication system. For example, it can be a next generation base station (next generation NodeB, gNB), a transmission reception point (TRP), a relay node, an access point (AP), etc. in the 5G access technology communication system.

It should be noted that in the communication system shown in FIG 1, the functions and interfaces of each device are only exemplary, and not all functions of each device are necessary when applied to embodiments of the present disclosure. All or part of the devices of the core network may be physical devices or virtualized devices, which is not limited herein. The communication system in the embodiment of the present disclosure may also include other devices not shown in FIG 1, which are not limited here.

At present, for the security in ProSe relay communication, the user plane based security mode or the control plane based security mode may be used to establish the discovery and communication security for PC5 interface between the terminal device and the relay device. For ProSe U2N relay service, the terminal device may choose to implement either the user plane based security mode or the control plane based security mode. A control plane security indicator is included in the parameters of ProSe U2N relay discovery provided by PCF to the terminal device (e.g., a remote UE) and the relay device (e.g., a relay UE) respectively. If the control plane security indicator is provided for an RSC, the control plane security indicator indicates that the control plane based security mode (or a security procedure) is adopted.

In a case that the control plane security indicator for RSC is provided to the terminal device and the relay device, and the terminal device and the relay device discover each other with respect to the RSC associated with the control plane security indicator, the terminal device may still use the user plane based security mode to send a direct communication request through the PC5 interface, or the relay device having received the direct communication request may still use the user plane based security mode to establish a PC5 communication security line for the relay service. In the above situation, the terminal device or the relay device performs wrong operation because the adopted security mode is incorrect. In the related art, there is no corresponding solution, which can verify whether the terminal device and relay device correctly adopt the security mode allocated for the requested relay service.

Therefore, how to prevent the terminal device and the relay device related to the relay communication from adopting inappropriate security mode is an urgent problem to be solved.

In order to solve the above problem, an embodiment of the present disclosure provides a method for verifying a security mode of a relay communication.

FIG 2 is a flowchart of a method for verifying a security mode of a relay communication in an embodiment of the present disclosure. This method may be applied to a relay device. As shown in FIG 2, the above method includes S201 to S204.

In S201, a first request message sent by a terminal device is received.

The first request message carries first information, and the first information is used to indicate a first security mode corresponding to a relay service of the terminal device.

In an embodiment, the first request message may be a direct communication request (DCR) message.

In an embodiment, the first information may include an RSC and a key parameter corresponding to the first security mode. The RSC is a relay service code, which may be used to identify the relay service. The key parameter corresponding to the first security mode may be a K_{NRP} freshness parameter 1.

It can be understood that the RSC may be obtained by the terminal device from a core network function (e.g., PCF) associated with the terminal device during the service authorization and information provisioning procedure. In an example, while the terminal device obtains the RSC from the core network function, the terminal device may also obtain the control plane security indicator from the core network function. The control plane security indicator may be provided for a specific RSC, and is used to instruct the relay service corresponding to the RSC to adopt the control plane based security mode.

In an embodiment, the first information may also include ProSe remote user key (PRUK) identification information, for example, a PRUK ID. PRUK identification information is used to identify the proximity based services remote user key. It can be understood that the PRUK identification information may be obtained by the terminal device from a network function (e.g., PKMF) associated with the terminal device. In addition, the terminal device may also obtain the PRUK identified by the PRUK identification information from the network function.

In an embodiment, the first security mode may be a control plane based security mode or a user plane based security mode. In an example, when the terminal device obtains the control plane security indicator (i.e., the control plane security indicator is provided for the RSC), the first security mode may be a control plane based security mode. In an example, the first security mode may be a user plane based security mode when the terminal device does not obtain the control plane security indicator (i.e., the control plane security indicator is not provided for RSC).

In practical application, at least part information in the first information may be used to indicate the first security mode corresponding to the relay service of the terminal device. In an example, the key parameter corresponding to the first security mode in the first information may be used alone to indicate that the first security mode is a user plane based security mode. In an example, the PRUK identification information in the first information may be used alone to indicate that the first security mode is a user plane based security mode. In an example, the key parameter corresponding to the first security mode in the first information and the PRUK identification information may be used together to indicate that the first security mode is a user plane based security mode.

In S202, a second security mode corresponding to the relay service of the terminal device is determined.

In an embodiment, the second security mode may be a user plane based security mode. Specifically, determining the second security mode corresponding to the relay service of the terminal device in S202 may include the following two steps.

In the first step, second information sent by a core network function associated with the relay device is received.

The second information is used to indicate the relay service and a corresponding security mode.

It can be understood that the relay device may obtain the second information from the core network function (e.g., PCF) associated with the relay device during the service authorization and information provisioning procedure. The second information may include RSC. In an example, while the terminal device obtains the RSC from the core network function, the terminal device may also obtain the control plane security indicator from the core network function.

In a second step, the second security mode is determined according to the second information.

It should be noted that the second security mode may be understood as a security mode adopted by the relay device for the relay service, and may also be understood as a security mode configured by the network for the relay service. The network configures the relay device with the corresponding security mode for relay service, which often means that the relay device will adopt the security mode configured by the network for the relay service.

In an embodiment, if the second information received by the relay device does not contain the control plane security indicator, the relay device determines that the second security mode corresponding to the RSC is a user plane based security mode. In an example, the second information received by the relay device contains a control plane security indicator, but the relay device may still determine that the second security mode corresponding to the RSC is a user plane based security mode.

In S203, it is determined whether the first security mode matches the second security mode.

As described above, the first security mode is determined in S201, and the second security mode is determined in S202. After that, the first security mode and the second security mode may be matched. In an example, the first security mode may be a control plane based security mode and the second security mode may be a user plane based security mode, so it can be determined that the first security mode and the second security mode do not match. In an example, the first security mode may be a user plane based security mode and the second security mode may be a user plane based security mode, so it can be determined that the first security mode and the second security mode are matched. Through the above matching, the matching condition between the first security mode and the second security mode can be obtained.

In S204, a second message is sent according to a matching condition.

It can be understood that the second message may be different according to different matching conditions, and the object to which the second message is sent may also be different.

In an example, in the case that the matching condition is that the first security mode does not match the second security mode, the relay device may send the second message to the terminal device. In this case, the second message may be used to indicate to reject the first request message. For example, the second message may be a direct communication reject message.

In an example, in the case that the matching condition is that the first security mode matches the second security mode, the relay device may send the second message to the network function. The second message carries the third information. The third information is used to indicate the second security mode corresponding to the relay service of the relay device. For example, the second message may be a key request message.

In practical application, the third information may include all or part of the contents of the first information. For example, the third information may include RSC and a key parameter corresponding to the first security mode. For another example, the third information may also include PRUK identification information. It can be understood that since the relay device has determined that the first security mode matches the second security mode, the key parameter corresponding to the first security mode (and possible PRUK identification information) in the third information indicates the first security mode, but it indirectly indicates the second security mode corresponding to the relay service of the relay device. In addition, in an embodiment, the third information may include the RSC and the key parameter corresponding to the second security mode.

In an embodiment, after it is determined that the first security mode matches the second security mode and the relay device sends the second message to the network function, the method may further include: receiving a third message sent by the network function associated with the relay device, where the third message is used to indicate that a third security mode corresponding to the relay service of the core network function associated with the relay device does not match the second security mode; and sending a second message to the terminal device according to the third message, where the second message is used to indicate that the first request message is rejected.

It can be understood that after the relay device sends the second message to the network function, the relay device may receive the third message from the network function. The third message may indicate that the third security mode does not match the second security mode. In an example, the third message may also carry a failure cause that leads to the mismatch between the third security mode and the second security mode. For example, the failure cause may be that the second security mode does not match the third security mode, or it may be other more specific reasons.

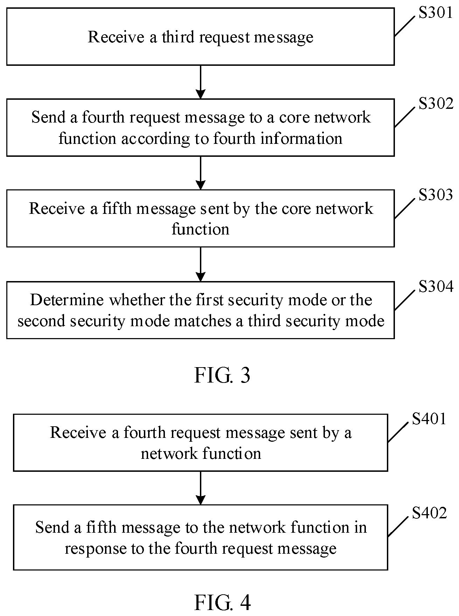

FIG 3 is a flowchart of another method for verifying a security mode of a relay communication in an embodiment of the present disclosure. This method may be applied to a network function. As shown in FIG 3, the above method includes S301 to S304.

In S301, a third request message is received.

The third request message carries fourth information, and the fourth information is used to indicate the first security mode corresponding to the relay service of the terminal device or the second security mode corresponding to the relay service of the relay device.

In an embodiment, the fourth information may include the RSC of the relay service and the key parameter corresponding to the first security mode. In an embodiment, the fourth information may include the RSC of the relay service and the key parameter corresponding to the second security mode.

In an embodiment, the third request message may be a key request message.

In addition, the network function may be a PKMF. In an embodiment, the network function may be the PKMF associated with the relay device. In an embodiment, the network function may be the PKMF associated with the terminal device. In addition, the network function may be a core network function located in the core network or a non-core network function located out of the core network, which is not limited by the embodiments of the present disclosure.

In S302, a fourth request message is sent to a core network function according to fourth information.

The fourth request message is used to request the third security mode corresponding to the relay service of the core network function.

It can be understood that the core network function may be PCF or other core network functions. The third security mode corresponding to the relay service of the core network function is a security mode configured by the network side for the relay service. In other words, the third security mode is a security mode corresponding to the RSC of the relay service. The third security mode may be a user plane based security mode, and may also be a control plane based security mode.

In S303, a fifth message sent by the core network function is received.

The fifth message is used to indicate the third security mode.

After sending the fourth request message to the core network function, the network function may receive a fifth message from the core network function.

In S304, it is determined whether the first security mode or the second security mode matches the third security mode.

The network device may determine whether the first security mode or the second security mode matches a third security mode according to the fifth message.

In an embodiment, if it is determined that the first security mode or the second security mode does not match the third security mode, the network function may send a sixth message. The sixth message is used to indicate that the first security mode or the second security mode does not match the third security mode.

In an embodiment, in the case that it is determined that the first security mode or the second security mode matches the third security mode, the network function may continue the subsequent procedure, for example, sending a message or performing the next processing.

In the practical application, the network function may be associated with the terminal device or the relay device. Correspondingly, the core network function may be associated with the terminal device or the relay device.

In an embodiment, the network function may be a PKMF associated with the relay device, and the core network function may be a PCF associated with the relay device. In this case, S301 to S303 will be specifically explained.

For S301, the PKMF may receive the third request message sent by the relay device. The fourth information in the third request message may be used to indicate the second security mode corresponding to the relay service of the relay device. It can be understood that in this case, the third request message may be the above-mentioned second message sent by the relay device.

For S302, the PKMF may send the fourth request message to PCF. The fourth request message is used to request the third security mode corresponding to the relay service of PCF.

For S303, the PKMF may receive the fifth message sent by PCF. Specifically, the fifth message may indicate the third security mode.

For S304, the PKMF may determine whether the second security mode matches the third security mode.

In addition, in the case that the second security mode does not match the third security mode, the PKMF may send a sixth message to the relay device. The sixth message is used to indicate that the second security mode does not match the third security mode. In an embodiment, the sixth message may be a key response message. In an embodiment, the sixth message may also carry a failure cause. For example, the failure cause may be that the second security mode does not match the third security mode, or it may be other more specific reasons.

In an embodiment, the network function may be a PKMF associated with the terminal device, and the core network function may be a PCF associated with the relay device. In this case, S301 to S303 will be specifically explained.

For S301, the PKMF may receive a third request message sent by the PKMF associated with the relay device. The fourth information in the third request message may be used to indicate the first security mode corresponding to the relay service of the terminal device. It can be understood that in this case, the third request message may be the above-mentioned request message sent by the PKMF associated with the relay device, for example, a key request message.

For S302, the PKMF may send a fourth request message to the PCF. The fourth request message is used to request the third security mode corresponding to the relay service of the PCF.

For S303, the PKMF may receive the fifth message sent by the PCF. Specifically, the fifth message may indicate the third security mode.

For S304, the PKMF may determine whether the first security mode matches the third security mode.

Furthermore, in the case that the first security mode does not match the third security mode, the PKMF may send the sixth message to the PKMF associated with the terminal device. The sixth message is used to indicate that the first security mode does not match the third security mode. In an embodiment, the sixth message may be a key response message. In an embodiment, the sixth message may also carry the failure cause. For example, the failure cause may be that the first security mode does not match the third security mode, or it may be other more specific reasons.

FIG 4 is a flowchart of another method for verifying a security mode of a relay communication in an embodiment of the present disclosure. This method may be applied to a core network function. As shown in FIG 4, the above method includes S401 to S402.

In S401, a fourth request message sent by the network function is received.

The fourth request message is used to request the third security mode corresponding to the relay service of the core network function.

It should be noted that the core network function may be the PCF. In an embodiment, the core network function may be the PCF associated with the relay device. In an embodiment, the core network function may be the PCF associated with the relay device. It should be noted that the core network function may also be other core network functions, which is not specifically limited in the embodiments of the present disclosure.

In addition, the network function may be the PKMF. In an embodiment, the network function may be the PKMF associated with the relay device. In an embodiment, the network function may be the PKMF associated with the relay device. It should be noted that the network function may also be other network functions, which is not specifically limited in the embodiments of the present disclosure.

In S402, a fifth message is sent to the network function in response to the fourth request message.

The fifth message is used to indicate the third security mode.

Specifically, in response to the fourth request message, the core network function carries the matching condition in the fifth message and sends the matching condition to the network function.

It should be noted that from S401 to S403, it is determined by the core network function whether the first security mode or the second security mode matches the third security mode corresponding to the relay service of the core network function. However, the core network function may not determine whether the first security mode or the second security mode matches the third security mode corresponding to the relay service of the core network function, but only send the third security mode to the network function through the fifth message for the network function to determine whether the first security mode or the second security mode matches the third security mode corresponding to the relay service of the core network function.

In the embodiments of the present disclosure, on the one hand, the security mode corresponding to the relay service of the terminal device is verified, and on the other hand, the security mode corresponding to the relay service of the relay device is verified, thereby realizing the verification of the security mode of relay communication and ensuring that the terminal device and the relay device that carry out relay communication adopt the correctly configured security mode.

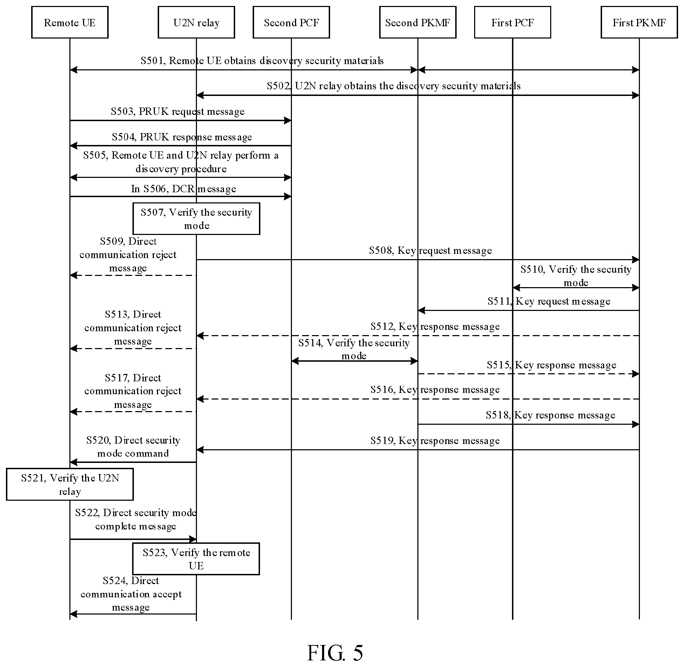

In order to promote the understanding of the technical solutions in the embodiments of the present disclosure, the method for verifying the security mode of the relay communication will be described below with reference to specific embodiments. FIG 5 is an implementation flowchart of the verification procedure of the security mode of the relay service in the embodiment of the present disclosure. The method for verifying the security mode of relay communication in the embodiment of the present disclosure is applicable to the relay service procedure.

In the embodiment shown in FIG 5, the terminal device may be a remote UE, the relay device may be a U2N relay, the network function associated with the relay device may be a first PKMF, the core network function associated with the relay device may be a first PCF, the network function associated with the terminal device may be a second PKMF, and the core network function associated with the terminal device may be a second PCF.

As shown in FIG 5, the relay service procedure may include S501 to S516.

In S501, the remote UE obtains discovery security materials.

The remote UE may establish a secure connection with the second PKMF through the PC8 interface (or referred to as the PC8 reference point).

It can be understood that in order to establish a secure connection, the remote UE may obtain the address of the second PKMF and the discovery parameter from the second PCF during the service authorization and information provisioning procedure. The discovery parameter may include the RSC, and may also include the control plane security indicator.

In an embodiment, the control plane security indicator may be configured by the second PCF for the relay service, and is used to indicate that a control plane based security mode is adopted for the relay service.

In an embodiment, the remote UE may also obtain discovery security materials from the second PKMF.

In S502, the U2N relay obtains the discovery security materials.

The U2N relay may establish a secure connection with the first PKMF through the PC8 interface (or referred to as the PC8 reference point).

It can be understood that in order to establish a secure connection, the U2N relay may obtain the address of the first PKMF and the discovery parameter from the first PCF during the service authorization and information provisioning procedure. The discovery parameters may include the RSC, and may also include the control plane security indicator.

In an embodiment, the control plane security indicator may be configured by the first PCF for the relay service, and is used to indicate that a control plane based security mode is adopted for the relay service.

In S503, the remote UE sends a PRUK request message to the second PKMF.

The PRUK request message is used to request the PRUK from the second PKMF.

In an embodiment, when the remote UE already has the PRUK from the second PKMF, the PRUK request message may carry the PRUK ID of the PRUK.

In S504, the remote UE receives a PRUK response message sent by the second PKMF.

The second PKMF verifies whether the remote UE is authorized to receive the U2N relay service. In the case where it is determined that the remote UE is authorized, the second PKMF sends a PRUK response message to the remote UE. The PRUK response message carries the PRUK and the PRUK ID.

In S505, the remote UE and the U2N relay perform a discovery procedure.

The remote UE and the U2N relay may perform the discovery procedure based on the discovery parameter and the discovery security materials.

In S506, the remote UE sends the DCR message to the U2N relay.

The DCR message (also referred to as the first request message) is used to request the provision of direct communication.

In an embodiment, the DCR message may carry the RSC and the key parameter (i.e., the K_{NRP} freshness parameter 1) of the security mode (also referred to as the first security mode) of the relay service of the remote UE.

In an embodiment, the DCR message may also carry a PRUK ID. In an embodiment, the DCR message may also carry a SUCI (subscription concealed identifier).

In S507, the U2N relay verifies the security mode.

The U2N relay matches the security mode adopted by the remote UE for the relay service with the security mode adopted by the U2N relay for the relay service (which may also be referred to as the second security mode), so as to verify the security mode.

It can be understood that, on the one hand, the U2N relay determines its own security mode for the relay service. In an embodiment, the security mode is a control plane based security mode in the case that the U2N relay determines the control plane security indicator associated with the received RSC and is configured based on the control plane security indicator. In an embodiment, the security mode is a user plane based security mode when the U2N relay does not receive the control plane security indicator associated with the RSC.

On the other hand, the U2N relay determines the security mode adopted by the remote UE for the relay service. The security mode may be a control plane based security mode or a user plane based security mode. In an embodiment, after the U2N relay receives the DCR message in S506, the U2N relay may determine that the remote UE initiates the DCR through a user plane based security procedure under the condition that the DCR includes a PRUK ID and/or a key parameter. In this case, the U2N relay may determine that the security mode adopted by the remote UE for the relay service is a user plane based security mode. Otherwise, the U2N relay may determine that the security mode adopted by the remote UE for the relay service is a control plane based security mode.

Then, the U2N relay matches the security mode adopted by the remote UE for the relay service with the security mode adopted by the U2N relay for the relay service.

It should be noted that the verification of the security mode by the U2N relay in S507 is not necessary. In some cases, after S506, the U2N may not verify the security mode and instead directly execute S508.

In S508, the U2N relay sends a key request message to the first PKMF.

If it is determined in S507 that the matching condition is met, the U2N relay may send a key request message (also referred to as a second message or a third request message) to the first PKMF. The key request message is used to request the key parameter corresponding to the security mode.

In an embodiment, the key request message may carry the PRUK ID or SUCI, RSC and the key parameter of the security mode of the relay service of the remote UE.

In S509, the U2N relay sends a direct communication reject message to the remote UE.

If it is determined in S507 that the matching condition is not matched, the U2N relay may send a direct communication reject message (also referred to as a second message) to the remote UE. The direct communication reject message is used to indicate that the DCR message is rejected.

In S510, the first PKMF verifies the security mode with the first PCF.

The first PKMF may interact with the first PCF to verify the security mode. It can be understood that the first PCF locally stores the security mode corresponding to the RSC of the relay service. In an embodiment, the verification of the security mode between the first PKMF and the first PCF may be realized in the following ways: the first PKMF may send a request message (also referred to as a fourth request message) to the first PCF. The request message is used to request the security mode (also referred to as a third security mode) corresponding to the relay service of the first PCF. After receiving the request message, the first PCF may send the security mode corresponding to the relay service of the U2N relay to the first PKMF through a response message (also referred to as a fifth message). After receiving the response message, the first PKMF matches the security mode carried in the response message with the security mode corresponding to the relay service of the U2N relay. In this way, the first PKMF can confirm the matching condition between the security mode corresponding to the relay service of the U2N relay and the security mode corresponding to the relay service of the first PCF.

In an embodiment, the request message sent by the first PKMF to the first PCF may carry the RSC of the relay service, so that the first PCF can locally determine the security mode corresponding to the RSC of the relay service (that is, the security mode allocated to the RSC).

In S511, the first PKMF sends a key request message to the second PKMF.

If the matching condition in S510 is met, the first PKMF sends the key request message to the second PKMF.

In an embodiment, the key request message may carry the PRUK ID or SUCI, RSC and the key parameter of the security mode of the relay service of the remote UE.

In S512, the first PKMF sands a key response message to the U2N relay.

If the matching condition in S510 is not met, the first PKMF sends a key response message (also called a sixth message) to the U2N relay. The key response message is used to indicate that the key request message from the U2N relay is rejected.

In an embodiment, the key request message may carry the failure cause.

In S513, the U2N relay sends a direct communication reject message to the remote UE.

After receiving the key response message in S512, the U2N relay sends a direct communication reject message (also called a second message) to the remote UE according to the key response message.

In S514, the second PKMF verifies the security mode with the second PCF.

The second PKMF may interact with the second PCF to verify the security mode. It can be understood that the second PCF locally stores the security mode corresponding to the RSC of the relay service. In an embodiment, the verification of the security mode between the second PKMF and the second PCF may be realized in the following ways: the second PKMF may send a request message (also referred to as a fourth request message) to the second PCF. The request message is used to request the security mode corresponding to the relay service of the second PCF (also referred to as the third security mode). After receiving the request message, the second PCF may send the security mode corresponding to the relay service of the remote UE to the second PKMF through a response message (also referred to as a fifth message). After receiving the response message, the second PKMF matches the security mode carried therein with the security mode corresponding to the relay service of the remote UE. In this way, the first PKMF can confirm the matching condition between the security mode corresponding to the relay service of the remote UE and the security mode corresponding to the relay service of the second PCF.

In an embodiment, the request message sent by the second PKMF to the second PCF may carry the RSC of the relay service, so that the second PCF can locally determine the security mode corresponding to the RSC of the relay service (that is, the security mode allocated to the RSC).

In S515, the second PKMF sends a key response message to the first PKMF.

If the matching condition in S514 is not met, the second PKMF sends a key response message (also referred to as a sixth message) to the first PKMF. The key response message is used to indicate that the key request message from U2N relay is rejected.

In an embodiment, the key request message may carry the failure cause.

In S516, the first PKMF sends a key response message to the U2N relay.

After receiving the key response message from the second PKMF in S517, the first PKMF sends the key response message to the U2N relay. The key response message is used to indicate that the key request message from U2N relay is rejected.

In an embodiment, the key request message may carry the failure cause.

In S517, the U2N relay sends a direct communication reject message to the remote UE.

After receiving the key response message in S512, the U2N relay sends a direct communication reject message (also referred to as a second message) to the remote UE according to the key response message.

It should be noted that S514 to S517 are optional. In other words, in some cases, after receiving the key request message from the first PKMF in S511, S518 may be directly executed without the verification of the security mode by the second PKMF.

In S518, the second PKMF sends a key response message to the first PKMF.

In this case, if the matching condition in S510 is met, the second PKMF sends a key response message to the first PKMF.

In an embodiment, the key response message may carry a key parameter. For example, the key parameter may include a K_{NRP} and/or a K_{NRP} freshness parameter 2.

In S519, the first PKMF sends a key response message to the U2N relay.

After receiving the key response message from the second PKMF in S518, the first PKMF sends the key response message to the U2N relay.

In an embodiment, the key response message may carry a key parameter. For example, the key parameter may include a K_{NRP} and/or a K_{NRP} freshness parameter 2.

In S520, the U2N relay sends a direct security mode command to the remote UE.

The direct security mode command carries the K_{NRP} freshness parameter 2.

In S521, the remote UE verifies the U2N relay.

After receiving the direct security mode command in S520, the remote UE verifies the direct security mode command based on at least the local PRUK, RSC, K_{NRP} freshness parameter 1 and K_{NRP} freshness parameter 1 obtained from the direct security mode command, so as to ensure that the U2N relay is authorized to provide relay services.

In S522, the remote UE relays a direct security mode complete message to U2N.

In response to the received direct security mode command, the remote UE sends a direct security mode complete message to U2N.

In S523, the U2N relay verifies the remote UE.

After receiving the direct security mode complete message in S522, the U2N relay verifies the direct security mode complete message to ensure that the remote UE is authorized to use the relay service.

In S524, the U2N relay sends a direct communication accept message to the remote UE.

After the verification is completed in S523, the U2N confirms that the remote UE is authorized to use the relay service, and sends a direct communication accept message to the remote UE.

At this point, the verification procedure of the security mode of the relay service shown in FIG 5 is completed.

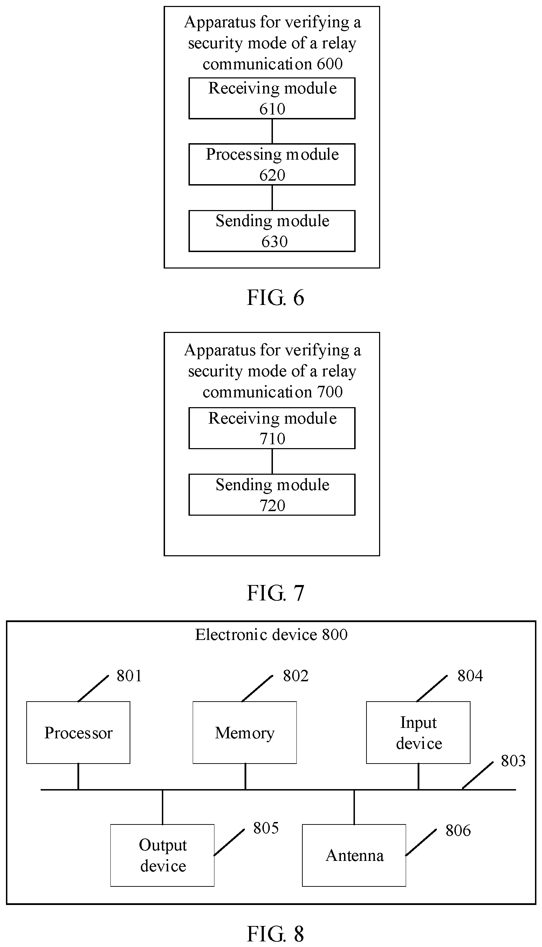

Based on the same inventive concept, the embodiment of the present disclosure also provides an apparatus for verifying a security mode of a relay communication. The apparatus may be provided on the relay device side or the network function side mentioned above, or a chip or a system on chip therein, and may also be a functional module used for realizing the methods described in the above embodiments. The device may realize the functions performed by the relay device or the network function in the above embodiments, and these functions may be realized by hardware executing corresponding software. These hardware or software include one or more modules corresponding to the above functions. FIG. 6 is a schematic structural diagram of an apparatus for verifying a security mode of a relay communication in an embodiment of the present disclosure. As shown in FIG 6, the apparatus 600 may include a receiving apparatus 610, a processing apparatus 620, and a sending apparatus 630.

In an embodiment, the apparatus for verifying the security mode of the relay communication shown in FIG 6 may be provided in relay device. The receiving apparatus 610 is configured to receive a first request message sent by a terminal device, where the first request message carries first information, and the first information is used to indicate a first security mode corresponding to the relay service of the terminal device. The processing apparatus 620 is configured to determine a second security mode corresponding to the relay service of the relay device, and determine whether the first security mode matches the second security mode. The sending apparatus 630 is configured to send the second message according to the matching condition.

In some possible embodiments, the first information may include the RSC of the relay service and the key parameter corresponding to the first security mode.

In some possible embodiments, the first security mode may be a control plane based security mode or a user plane based security mode, and the second security mode may be the user plane based security mode.

In some possible embodiments, the receiving module 610 may be configured to receive the second information sent by the core network function associated with the relay device, and the second information is used to indicate the relay service and the corresponding security mode. The processing module 620 may be configured to determine a second security mode according to the second information.

In some possible embodiments, the sending module 630 may be configured to send a second message to the terminal device when it is determined that the first security mode does not match the second security mode, and the second message is used to indicate that the first request message is rejected.

In some possible embodiments, the sending module 630 may be configured to send a second message to the network function associated with the relay device when it is determined that the first security mode matches the second security mode, and the second message carries third information, which is used to indicate the second security mode corresponding to the relay service of the relay device.

In some possible embodiments, the third information may include the RSC of the relay service and the key parameter corresponding to the second security mode.

In some possible embodiments, the receiving module 610 may be further configured to receive a third message sent by the network function associated with the relay device. The third message is used to indicate that the third security mode corresponding to the relay service of the core network function associated with the relay device does not match the second security mode. The sending module 630 may also be configured to send a second message to the terminal device according to the third message, and the second message is used to indicate that the first request message is rejected.

In an embodiment, the apparatus for verifying the security mode of the relay communication shown in FIG 6 may be provided in a network function. The receiving module 610 is configured to receive a third request message, which carries fourth information, and the fourth information is used to indicate the first security mode corresponding to the relay service of the terminal device or the second security mode corresponding to the relay service of the relay device. The sending module 630 is configured to send a fourth request message to the core network function according to the fourth information, where the fourth request message is used to request the third security mode corresponding to the relay service of the core network function. The receiving module 610 is further configured to receive a fifth message sent by the core network function, and the fifth message is used to indicate the third security mode. The processing module 620 is configured to determine whether the first security mode or the second security mode matches the third security mode.

In some possible embodiments, the fourth information may include the RSC of the relay service and the key parameter corresponding to the first security mode, or the fourth information may include the RSC of the relay service and the key parameter corresponding to the second security mode.

In some possible embodiments, the fourth request message may carry the RSC of the relay service.

In some possible embodiments, the first security mode may be a control plane based security mode or a user plane based security mode, and the third security mode may be the user plane based security mode.

In some possible embodiments, the sending module 620 may be further configured to send a sixth message indicating that the first security mode or the second security mode does not match the third security mode.

In some possible embodiments, the network function may be a PKMF associated with the relay device, and the core network function may be a PCF associated with the relay device.

In some possible embodiments, the network function may be a PKMF associated with the terminal device, and the core network function may be a PCF associated with the terminal device.

Based on the same inventive concept, the embodiment of the present disclosure also provides an apparatus for verifying a security mode of a relay communication. The apparatus may be provided in the above-mentioned core network function, or a chip or a system on chip therein, and may also be a functional module for realizing the methods described in the above-mentioned embodiments. The apparatus may realize the functions performed by the core network functions in the above embodiments, and these functions may be realized by hardware executing corresponding software. These hardware or software include one or more modules corresponding to the above functions. FIG. 7 is a schematic structural diagram of an apparatus for verifying a security mode of a relay communication in an embodiment of the present disclosure. As shown in FIG 7, the apparatus may include a receiving apparatus 710 and a sending apparatus 720.

In an embodiment, the apparatus for verifying the security mode of the relay communication shown in FIG 7 may be provided in a core network function. The receiving apparatus 710 is configured to receive a fourth request message sent by the network function, and the fourth request message is used to request a third security mode corresponding to the relay service of the core network function. The sending apparatus 620 is configured to send a fifth message to the network function in response to the fourth request message, and the fifth message is used to indicate the third security mode.

In some possible embodiments, the fourth request message may carry the RSC of the relay service.

In some possible embodiments, the first security mode may be a control plane based security mode or a user plane based security mode, and the third security mode may be the user plane based security mode.

In some possible embodiments, the network function may be a PKMF associated with the relay device, and the core network function may be a PCF associated with the relay device.

In some possible embodiments, the network function may be a PKMF associated with the terminal device, and the core network function may be a PCF associated with the terminal device.

It should be noted that the specific implementation processes of the receiving module, the processing module and the sending module can refer to the detailed descriptions of the corresponding embodiments in FIGS. 2 to 6, and are not repeated here for the sake of brevity.

The receiving module mentioned in the embodiment of the present disclosure may be a receiving interface, a receiving circuit or a receiver, etc. The sending module can be a sending interface, a sending circuit or a transmitter. The processing module may be one or more processors.

Based on the same inventive concept, the embodiment of the present disclosure also provides a communication system. The communication system includes a network function and a core network function. The network function is configured to send a fourth request message to the core network function according to the fourth information, where the fourth information is used for indicating the first security mode corresponding to the relay service of the terminal device or the second security mode corresponding to the relay service of the relay device, and the fourth request message is used for requesting the third security mode corresponding to the relay service of the core network function. It is determined whether the first security mode or the second security mode matches the third security mode. The core network function is configured to send a fifth message to the network function according to the fourth request message, and the fifth message is used to indicate the third security mode.

In some possible embodiments, the network function may also be configured to receive a third request message, which carries fourth information.

In some possible embodiments, the fourth information may include the RSC of the relay service and the key parameter corresponding to the first security mode, or the fourth information may include the RSC of the relay service and the key parameter corresponding to the second security mode.

In some possible embodiments, the fourth request message may carry the RSC of the relay service.

In some possible embodiments, the first security mode may be a control plane based security mode or a user plane based security mode, and the third security mode may be the user plane based security mode.

In some possible embodiments, the network function may also be configured to send a sixth message when it is determined that first security mode or the second security mode does not match the third security mode, where the sixth message is used to indicate that the first security mode or the second security mode does not match the third security mode.

In some possible embodiments, the network function may be a PKMF associated with the relay device, and the core network function may be a PCF associated with the relay device.

In some possible embodiments, the network function may be a PKMF associated with the terminal device, and the core network function may be a PCF associated with the terminal device.

Based on the same inventive concept, embodiments of the present disclosure provide an electronic device, which may be a relay device, a network function, or a core network function described in one or more of the above embodiments. FIG 8 is a schematic structural diagram of an electronic device in an embodiment of the present disclosure. As shown in FIG 8, the electronic device 800 uses general computer hardware, including a processor 801, a memory 802, a bus 803, an input device 804 and an output device 805.

In some possible implementations, the memory 802 may include computer storage media in the form of volatile and/or non-volatile memory, such as read-only memory and/or random access memory. The memory 802 may store an operating system, application programs, other program modules, executable codes, program data, user data, and the like.

The input device 804 may be used to input commands and information to an electronic device. The input device 804 is, for example, a keyboard or a pointing device such as a mouse, a trackball, a touch pad, a microphone, a joystick, a game pad, a satellite television antenna, a scanner, or similar device. These input devices may be connected to the processor 801 via the bus 803.

The output device 805 may be used for the electronic device to output information. In addition to the monitor, the output device 805 may also be other peripheral output devices, such as speakers and/or printing devices. These output devices may also be connected to the processor 801 through the bus 803.

The electronic device may be connected to a network through the antenna 806, for example, to a local area network (LAN). In the networked environment, the computer-executed instructions stored in the control device may be stored in a remote storage device and are not limited to local storage.

When the processor 801 in the electronic device 800 executes the executable code or application program stored in the memory 802, the electronic device performs the method for verifying the security mode of the relay communication on the relay device side, the network function side or the core network function side in the above embodiments. For the specific execution process, reference is made to the above embodiments, which will not be repeated herein.

In addition, the above memory 802 stores computer-executed instructions for implementing the functions of the receiving module 610, the processing module 620 and the sending module 630 in FIG 6. The functions/implementation processes of the receiving module 610, the processing module 620 and the sending module 630 in FIG 6 can all be implemented by the processor 801 in FIG 8 calling the computer execution instructions stored in the memory 802. For the specific implementation processes and functions, reference is made to the above related embodiments.

In addition, the above memory 802 stores computer execution instructions for implementing the functions of the receiving module 710 and the sending module 720 in FIG 7. The functions/implementation processes of the receiving module 710 and the sending module 720 in FIG 7 can be implemented by the processor 801 in FIG 8 calling the computer execution instructions stored in the memory 802. For the specific implementation processes and functions, reference is made to the above related embodiments.

Based on the same inventive concept, an embodiment of the present disclosure provides a terminal device, which is consistent with the terminal device in one or more of the above embodiments. Alternatively, the terminal device may be a mobile phone, a computer, a digital broadcast terminal, a messaging device, a game console, a tablet device, a medical device, a fitness device, a personal digital assistant, etc.

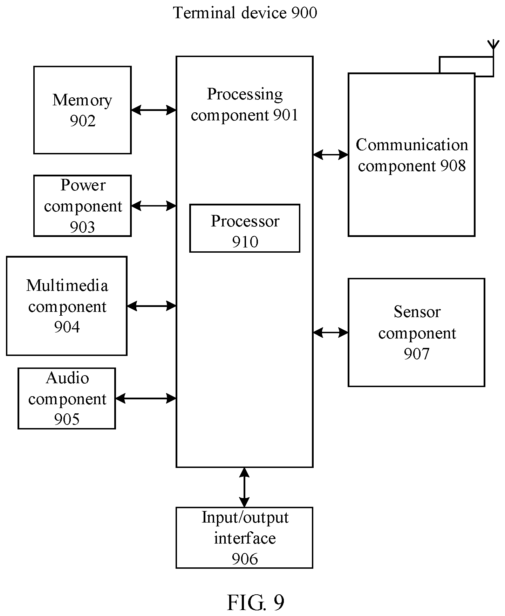

FIG 9 is a schematic structural diagram of a terminal device in an embodiment of the present disclosure. As shown in FIG 9, the terminal device 900 may include one or more of the following components: a processing component 901, a memory 902, a power component 903, a multimedia component 904, an audio component 905, an input/output (I/O) interface 906, a sensor component 907 and a communication component 908.

The processing component 901 typically controls overall operations of the terminal device 900, such as the operations associated with display, telephone calls, data communications, camera operations, and recording operations. The processing component 901 may include one or more processors 910 to execute instructions to perform all or part of the steps in the above described methods. Moreover, the processing component 901 may include one or more modules which facilitate the interaction between the processing component 901 and other components. For instance, the processing component 901 may include a multimedia module to facilitate the interaction between the multimedia component 904 and the processing component 901.

The memory 902 is configured to store various types of data to support the operation of the device 900. Examples of such data include instructions for any applications or methods operated on the terminal device 900, contact data, phonebook data, messages, pictures, video, etc. The memory 902 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 903 provides power to various components of the terminal device 900. The power component 903 may include a power management system, one or more power sources, and any other components associated with the generation, management, and distribution of power in the terminal device 900.

The multimedia component 904 includes a screen providing an output interface between the terminal device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 904 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 905 is configured to output and/or input audio signals. For example, the audio component 905 includes a microphone ("MIC") configured to receive an external audio signal when the terminal device 900 is in an operation mode, such as a call mode, a recording mode, and a voice recognition mode. The received audio signal may be further stored in the memory 902 or transmitted via the communication component 908. In some embodiments, the audio component 905 further includes a speaker to output audio signals.

The I/O interface 906 provides an interface between the processing component 901 and peripheral interface modules, such as a keyboard, a click wheel, buttons, and the like. The buttons may include, but are not limited to, a home button, a volume button, a starting button, and a locking button.

The sensor component 907 includes one or more sensors to provide status assessments of various aspects of the terminal device 900. For instance, the sensor component 907 may detect an open/closed status of the device 900, relative positioning of components, e.g., the display and the keypad, of the terminal device 900, a change in position of the terminal device 900 or a component of the terminal device 900, a presence or absence of user contact with the terminal device 900, an orientation or an acceleration/deceleration of the terminal device 900, and a change in temperature of the terminal device 900. The sensor component 907 may include a proximity sensor configured to detect the presence of nearby objects without any physical contact. The sensor component 907 may also include a light sensor, such as a CMOS or CCD image sensor, for use in imaging applications. In some embodiments, the sensor component 907 may also include an accelerometer sensor, a gyroscope sensor, a magnetic sensor, a pressure sensor, or a temperature sensor.

The communication component 908 is configured to facilitate communication, wired or wirelessly, between the terminal device 900 and other devices. The terminal device 900 can access a wireless network based on a communication standard, such as WiFi, 2G, 3G, 4G, 5G or future evolved versions, or a combination thereof. In one exemplary embodiment, the communication component 908 receives a broadcast signal or broadcast associated information from an external broadcast management system via a broadcast channel. In one exemplary embodiment, the communication component 908 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

Based on the same inventive concept, the embodiment of the present disclosure also provides a computer-readable storage medium, in which instructions are stored; When the instructions are run on a computer, the security mode verifying method is used for executing the relay communication on the relay device side, the network function side or the core network function side in one or more embodiments.

Based on the same inventive concept, the embodiment of the present disclosure also provides a computer program or a computer program product, which, when executed on a computer, causes the computer to realize the method for verifying the security mode of the relay communication on the relay device side, the network function side or the core network function side in one or more of the above embodiments.

Other embodiments of the present disclosure will be apparent to those skilled in the art from consideration of the specification and practice of the present disclosure. The present disclosure is intended to cover any variations, uses, or adaptations of the present disclosure, which follows the general principles thereof and includes the common knowledge or habitual technical means in this technical field that is not disclosed in the present disclosure. The specification and embodiments are considered as exemplary only, with a true scope and spirit of the present disclosure being indicated by the appending claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. A method for verifying a security mode of a relay communication, applied to a relay device and comprising:
receiving a first request message sent by a terminal device, wherein the first request message carries first information, and the first information is configured to indicate a first security mode corresponding to a relay service of the terminal device;
determining a second security mode corresponding to the relay service of the relay device;
determining whether the first security mode matches the second security mode; and
sending a second message according to a matching condition.

2. The method according to claim 1, wherein the first information comprises a relay service code (RSC) of the relay service and a key parameter corresponding to the first security mode.

3. The method according to claim 1, wherein the first security mode is a control plane based security mode or a user plane based security mode, and the second security mode is the user plane based security mode.

4. The method according to claim 1, wherein determining the second security mode corresponding to the relay service of the relay device comprises:
receiving second information sent by a core network function associated with the relay device, wherein the second information is configured to indicate the relay service and a corresponding security mode; and
determining the second security mode according to the second information.

5. The method according to claim 1, wherein sending the second message according to the matching condition comprises:
in a case of determining that the first security mode does not match the second security mode, sending the second message to the terminal device, wherein the second message is configured to indicate to reject the first request message.

6. The method according to claim 1, wherein sending the second message according to the matching condition comprises:
in a case of determining that the first security mode matches the second security mode, sending the second message to a network function associated with the relay device, wherein the second message carries third information, and the third information is configured to indicate the second security mode corresponding to the relay service of the relay device.

7. The method according to claim 6, wherein the third information comprises an RSC of the relay service and a key parameter corresponding to the second security mode.

8. The method according to claim 6, wherein after sending the second message to the first network function, the method further comprises:
receiving a third message sent by the network function associated with the relay device, wherein the third message is configured to indicate that a third security mode corresponding to the relay service in a core network function associated with the relay device does not match the second security mode; and
sending the second message to the terminal device according to the third message, wherein the second message is configured to indicate to reject the first request message.

9. A method for verifying a security mode of a relay communication, applied to a network function and comprising:
receiving a third request message, wherein the third request message carries fourth information, and the fourth information is configured to indicate a first security mode corresponding to a relay service of a terminal device or a second security mode corresponding to a relay service of a relay device;
sending a fourth request message to a core network function according to the fourth information, wherein the fourth request message is configured to request a third security mode corresponding to the relay service in the core network function;
receiving a fifth message sent by the core network function, wherein the fifth message is configured to indicate the third security mode; and
determining whether the first security mode or the second security mode matches the third security mode.

10. The method according to claim 9, wherein the fourth information comprises a relay service code (RSC) of the relay service and a key parameter corresponding to the first security mode, or the fourth information comprises the RSC of the relay service and a key parameter corresponding to the second security mode.

11. The method according to claim 9, wherein the fourth request message carries the RSC of the relay service.

12. The method according to claim 9, wherein the first security mode is a control plane based security mode or a user plane based security mode, and the third security mode is the user plane based security mode.

13. The method according to claim 9, wherein the method further comprises:
in a case of determining that the first security mode or the second security mode does not match the third security mode, sending a sixth message configured to indicate that the first security mode or the second security mode does not match the third security mode.

14. The method according to claim 9, wherein the network function is a proximity based services key management function (PKMF) associated with the relay device, and the core network function is a policy control function (PCF) associated with the relay device.

15. The method according to claim 9, wherein the network function is a PKMF associated with the terminal device, and the core network function is a PCF associated with the terminal device.

16. A method for verifying a security mode of a relay communication, applied to a core network function and comprising:
receiving a fourth request message sent by a network function, wherein the fourth request message is configured to request a third security mode corresponding to a relay service of the core network function; and
sending a fifth message to the network function in response to the fourth request message, wherein the fifth message is configured to indicate the third security mode.

17. The method according to claim 16, wherein the fourth request message carries a relay service code (RSC) of the relay service.

18. The method according to claim 16, wherein the third security mode is a user plane based security mode.

19. The method according to claim 16, wherein the network function is a proximity based services key management function (PKMF) associated with the relay device, and the core network function is a policy control function (PCF) associated with the relay device.

20. The method according to claim 16, wherein the network function is a PKMF associated with the terminal device, and the core network function is a PCF associated with the terminal device.

21. An apparatus for verifying a security mode of a relay communication, provided in a relay device and comprising:
a receiving module, configured to receive a first request message sent by a terminal device, wherein the first request message carries first information, and the first information is configured to indicate a first security mode corresponding to a relay service of the terminal device;
a processing module, configured to determine a second security mode corresponding to the relay service of the relay device and determine whether the first security mode matches the second security mode; and
a sending module, configured to send a second message according to a matching condition.

22. An apparatus for verifying a security mode of a relay communication, provided in a network function and comprising:
a receiving module, configured to receive a third request message, wherein the third request message carries fourth information, and the fourth information is configured to indicate a first security mode corresponding to a relay service of a terminal device or a second security mode corresponding to the relay service of a relay device;
a sending module, configured to send a fourth request message to a core network function according to the fourth information, wherein the fourth request message is configured to request a third security mode corresponding to the relay service in the core network function;
wherein the receiving module is further configured to receive a fifth message sent by the core network function, and the fifth message is configured to indicate the third security mode; and
a processing module, configured to determine whether the first security mode or the second security mode matches the third security mode.

23. An apparatus for verifying a security mode of a relay communication, provided in a core network function and comprising:
a receiving module, configured to receive a fourth request message sent by a network function, wherein the fourth request message is configured to request a third security mode corresponding to a relay service of the core network function; and
a sending module, configured to send a fifth message to the network function, wherein the fifth message is configured to indicate the third security mode.

24. A communication system comprising:
a network function, configured to:
send a fourth request message to a core network function according to fourth information, wherein the fourth information is configured to indicate a first security mode corresponding to a relay service of a terminal device or a second security mode corresponding to the relay service of a relay device, and the fourth request message is configured to request a third security mode corresponding to the relay service in the core network function; and
determine whether the first security mode or the second security mode matches the third security mode; and
a core network function, configured to:
sending a fifth message to the network function in response to the fourth request message, wherein the fifth message is configured to indicate the third security mode.

25. A terminal device, comprising:
a memory; and
a processor, connected to the memory, configured to execute computer-executable instructions stored on the memory, to implement the method according to any one of claims 1 to 20.

26. A computer storage medium, storing computer-executable instructions which, after being executed by a processor, are capable of implementing the method according to any one of claims 1 to 20.
